# EUROPÄISCHE PATENTSCHRIFT

(11) **EP 2 474 763 B1**
(45) Veröffentlichungstag und Bekanntmachung des Hinweises auf die Patenterteilung: **28.10.2015**
(21) Anmeldenummer: 12150567.1
(22) Anmeldetag: 10.01.2012
(51) Int. Cl.: F16K 7/14, F16K 41/10, B29C 49/28, B29C 49/06, B29C 49/42

(54) **Blasmaschine mit einem Blasventil zum Expandieren von Kunststoffbehältnissen**
Blow moulding machine with a valve for expanding plastic containers
Souffleuse et soupape de soufflage pour l'expansion de récipients en matière plastique

(30) Priorität: 10.01.2011 DE 102011008173
(43) Veröffentlichungstag der Anmeldung: 11.07.2012
(73) Patentinhaber: Krones AG, 93073 Neutraubling (DE)
(72) Erfinder: Knott, Josef, 93073 Neutraubling (DE); Handschuh, Eduard, 93073 Neutraubling (DE)
(74) Vertreter: Bittner, Bernhard

(56) Entgegenhaltungen:
- EP-A1- 1 271 029
- WO-A1-02/099324
- WO-A1-2005/036039
- WO-A2-2011/042184
- JP-A- 9 257 152
- US-A1- 2006 145 107
- US-B1- 6 394 417

## Beschreibung

Die vorliegende Erfindung bezieht sich gemäß dem Oberbegriff des Patentanspruchs 1 auf eine Blasmaschine mit einem Blasventil und auf eine Abfüllanlage mit einer Blasmaschine.

Blasventile sind stark belastete Bauteile, deren Komponenten unter hohen Drücken stehen und schnellen Richtungswechseln und somit starken Beschleunigungen ausgesetzt sind. Verwendet bzw. eingesetzt werden Blasventile in Blasmaschinen, insbesondere in Blasmaschinen zum Umformen von Vorformlingen in Behältnisse, insbesondere in Flaschen. Im Bereich der Lebensmittelindustrie und auch in weiteren Industriebereichen ist es erforderlich, dass die Behältnisse keimfrei behandelt bzw. erzeugt werden. Die Umformung erfolgt bevorzugt durch die Zuführung von einem Fluid in den Innenraum des Vorformlings, der sich besonders bevorzugt in einer Blasform befindet und aufgrund des unter Druck stehenden Fluides bis zur Negativform der Blasform expandiert wird. Um eine aufwendige Reinigung der umgeformten Behältnisse zu vermeiden, bestehen hohe Anforderungen an die Reinheit des Fluides.

Aus der Druckschrift EP 1 271 029 A1 ist ein Ventil zur Verwendung in einer Blasmaschine bekannt. Das aus der EP 1 271 029 A1 bekannte Ventil weist einen verfahrbaren Kolben auf, an dessen einem Ende eine Dichteinrichtung zum Abdichten einer Gehäuseöffnung vorgesehen ist, durch die hindurch ein zur Umformung des Vorformlings verwendete Gas geführt wird. Der Kolben bewegt sich bei einer Öffnungs- und Schließbewegung relativ zu einem Wandungsteil und bildet mit diesem Wandungsteil einen Schlitz aus, der durch einen Dichtring abgedichtet wird. Die Verwendung eines Dichtrings ist hierbei höchst nachteilig, da aufgrund der Relativbewegung des Kolbens und der Wandung eine ständige Belastung des Dichtrings resultiert, wodurch dieser in seiner Funktionalität, d.h. seiner Dichtwirkung stark abnimmt. Weiterhin ist schon bei geringen Geschwindigkeiten des Kolbens nicht absolut sichergestellt, dass keine Verunreinigungen in den sterilen Bereich eindringen, da der Kolben über die Dichtung hinweg vom ungereinigten bzw. unsterilen Rückraum in den gereinigten bzw. sterilen Ventilraum bzw. Steuerraum gleitet und diesen daher verunreinigt.

Die Druckschrift WO 2011/042184 beschreibt ein Ventil für eine Blasformeinrichtung. Das Ventil wird pneumatisch betrieben und schließt zwei Leitungsabschnitte temporär voneinander ab.

Es ist somit die Aufgabe der vorliegenden Erfindung eine Blasmaschine mit einem Blasventil bereitzustellen, die trotz einer hohen Schaltungsfrequenz und hohen Betriebsdrücken, dauerhaft die Verhinderung einer Verunreinigung eines aseptischen Bereichs in Folge einer Stellgliedbewegung zulässt.

Die Lösung der zuvor gestellten Aufgabe erfolgt erfindungsgemäß durch eine Blasmaschine mit einem Blasventil zum Verändern einer Funktionsgasdurchflussmenge in einem Funktionsgaskommunikationsweg. Das Blasventil umfasst dabei mindestens einen Blasventilkörper, der bevorzugt mehrteilig ausgebildet ist, einen in dem Blasventilkörper ausgebildeten aseptischen Aufnahmeraum mit mindestens einer Eintrittsöffnung und mindestens einer Austrittsöffnung zum Aufnehmen und Leiten eines Funktionsgases und einen zweiten in dem Blasventilkörper ausgebildeten Aufnahmeraum zum Führen eines Stellglieds. Erfindungsgemäß ist zwischen dem ersten Aufnahmeraum und dem zweiten Aufnahmeraum ein Dichtmittel angeordnet, das einen Gasaustausch zwischen dem ersten Aufnahmeraum und dem zweiten Aufnahmeraum vollständig verhindert, wobei das Dichtmittel einen ortsfesten Anteil zum Fixieren an dem Blasventilgrundkörper und einen beweglichen Anteil zum Verändern der Funktionsgasdurchflussmenge aufweist, wobei das Stellglied teilweise von dem Dichtmittel umschlossen ist und zum Bewegen des beweglichen Anteils bzw. Abschnitts mit diesem gekoppelt ist.

Dies ist vorteilhaft, da kein Schlitz zwischen sich relativ zueinander bewegenden Bauteilen mittels eines Dichtrings abgedichtet werden muss, und somit eine vollständige Kapselung des sterilen ersten Aufnahmeraums vom unsterilen zweiten Aufnahmeraum gegeben ist. Die Dichtwirkung wird insbesondere durch zwei nicht zueinander bewegte Komponenten, d.h. den ortsfesten bzw. positionsfesten Anteil der Dichtung, und bevorzugt einen korrespondierenden Bereich des Gehäuses bewirkt. Weiterhin ist vorteilhaft, dass eine sehr lange Lebensdauer des Blasventils, d.h. ca. 10 Millionen Blaszyklen, bei zwei Hüben pro Blasvorgang realisierbar ist.

Als Stellglied kann somit bevorzugt jede Einrichtung verstanden werden, die eine Bewegung der Dichtung ermöglicht. Eine solche Einrichtung kann abschnittsweise oder vollständig innerhalb und/oder außerhalb des Ventilkörpers angebracht sein und einen Antrieb darstellen bzw. mit einem Antrieb verbunden sein.

Bevorzugt ist die Hubhöhe, d.h. der Weg, der von dem Kolbenelement bzw. dem Stellglied maximal zurückgelegt wird, zwischen 2 mm und 20 mm und bevorzugt zwischen 3 mm und 10 mm und besonders bevorzugt zwischen 4 mm und 6 mm, insbesondere genau 5 mm. Weiterhin hat die Eintritt- und/oder Austrittsöffnung vorzugsweise einen Durchmesser zwischen 10 mm und 50 mm, bevorzugt zwischen 12 mm und 30 mm und besonders bevorzugt zwischen 14 mm und 18 mm und insbesondere von genau 16 mm. Der Durchmesser der Wirkfläche des Kolbenelements bzw. des Stellglieds liegt vorzugsweise zwischen 10 mm und 100 mm, bevorzugt zwischen 30 mm und 70 mm und besonders bevorzugt zwischen 45 mm und 55 mm. Insbesondere beträgt der Durchmesser der Wirkfläche im Wesentlichen 50 mm oder genau 50 mm. Der Durchmesser der Verschlussfläche liegt vorzugsweise zwischen 5 mm und 50 mm, bevorzugt zwischen 15 mm und 30 mm und besonders bevorzugt zwischen 20 mm und 24 mm, insbesondere beträgt der Durchmesser der Verschlussfläche im Wesentlichen 22 mm oder genau 22 mm.

Das Stellglied ist bevorzugt ein Kolbenelement, das in Folge von Druckänderungen auf einer bevorzugt linearen Bewegungsbahn verschiebbar ist. Es ist weiterhin denkbar, dass der erste Aufnahmeraum und/oder zweite Aufnahmeraum zylinderförmig oder quaderförmig ausgebildet ist, wobei er ebenfalls sphärische, insbesondere kugelförmige Abschnitte, aufweisen kann.

Zum Verschließen der mindestens einen Öffnung, d.h. einer Einlassöffnung und/oder einer Auslassöffnung bzw. einer Einlass- und/oder Auslassbohrung, ist der bewegliche Abschnitt, der eine Verschlussfläche ausbildet bzw. an dem eine Verschlussfläche oder ein Verschlussbereich ausgebildet ist, mit der Öffnung in Kontakt bringbar.

Diese Ausführungsform ist vorteilhaft, da je nach Distanz des beweglichen Abschnitts zur Öffnung die Durchflussmenge veränderbar ist, d.h., dass zwischen einer geschlossenen Stellung und einer vollständig geöffneten Stellung bevorzugt stufenlos oder in Stufen gewechselt werden kann, wobei auch denkbar ist, dass nur genau zwischen einer geöffneten Stellung und der geschlossenen Stellung gewechselt werden kann. Die Öffnung und der bewegliche Abschnitt können einen oder mehrere Kontaktbereiche zum Abdichten aufweisen, wobei in der geschlossenen Stellung bevorzugt genau ein Kontaktbereich zwischen dem beweglichen Abschnitt und der Öffnung ausgebildet ist. Der Kontaktbereich kann dabei linienförmig und/oder flächig ausgebildet sein. Bevorzugt sind die Verschlussfläche oder eine Verschlusskante und die Öffnung korrespondierend zueinander ausgebildet. Es ist hierbei denkbar, dass die Öffnung eben, konisch, sphärisch, insbesondere gebogen, etc. oder aus Kombinationen daraus ausgebildet ist.

Gemäß einer weiteren bevorzugten Ausführungsform der vorliegenden Erfindung ist die Verschlussfläche an einem ersten Teil des beweglichen Abschnitts ausgebildet, der besonders bevorzugt fest an bzw. gegenüber dem Stellglied, insbesondere an dem Kolbenelement, angeordnet ist.

Diese Ausführungsform ist vorteilhaft, da keine Relativbewegung zwischen dem ersten Teil des beweglichen Abschnitts und dem Stellglied bzw. dem Kolbenelement auftritt. Es ist daher eine sehr genaue und verschleißfreie Ansteuerung bzw. Öffnungs- und Schließbewegung durchführbar.

Gemäß einer weiteren bevorzugten Ausführungsform der vorliegenden Erfindung ist zwischen dem ersten Teil des beweglichen Abschnitts und dem ortsfesten Anteil des Dichtmittels ein zweiter beweglicher Teil des beweglichen Abschnitts ausgebildet, der gegenüber dem Kolbenelement beweglich ist.

Diese Ausführungsform ist vorteilhaft, da sie eine Relativbewegung des ersten Teils des beweglichen Abschnitts synchron mit dem Kolben gegenüber dem Gehäuse und/oder dem ortsfesten Anteil des Dichtmittels ermöglicht.

Bevorzugt ist das in den ersten und/oder zweiten Aufnahmeraum ragende Dichtmittel, d.h. der sich zwischen den in Kolbenlängsrichtung bzw. in der Stellgliedbewegungsrichtung ausgebildeten Begrenzungswandungen erstreckende Anteil des Dichtmittels, komplett vom Stellglied bzw. dem Kolbenelement überlagert und besonders bevorzugt befindet sich zwischen dem überlagerten Anteil des Dichtmittels und dem Kolbenelement ausschließlich ein Gas, insbesondere Luft, oder ein Vakuum. Ferner ist denkbar, dass die Form des Kolbenelements bzw. des Stellglieds und die Form des zweiten Teils des beweglichen Abschnitts bevorzugt voneinander abweichen. Der zweite Teil des beweglichen Abschnitts verbindet, insbesondere einstückig, bevorzugt den ersten Teil des beweglichen Abschnitts mit dem ortsfesten Anteil.

Der zweite bewegliche Teil ist balgartig, insbesondere mäanderförmig, und/oder membranartig ausgebildet. Diese Form ist vorteilhaft, da verschiedene Verschiebewege realisierbar sind, ohne dass eine Beeinflussung der Dichtwirkung bzw. des ortsfesten Anteils des Dichtmittels erfolgt. Je nach Öffnungsstellung kann eine größere Menge an Fluid, insbesondere Gas, durch das Blasventil hindurch strömen. Zum Ermöglichen eines maximalen Durchflusses entspricht bevorzugt der zwischen der Verschlussfläche und der zu verschließenden Öffnung ausgebildete maximale Fluidkommunikationsweg in seinem Durchmesser bzw. seiner Öffnungsfläche dem Durchmesser bzw. der Öffnungsfläche der kleinsten Öffnung.

Als balgartig wird in dem zuvor genannten Zusammenhang bevorzugt mindestens eine einen Bogen ausbildende Falte, insbesondere 2,3,4,5,6,7, 8 oder mehr Bögen ausbildende Falten, und bevorzugt mehrere hintereinander oder untereinander angeordnete und miteinander verbundene Bögen verstanden. Bevorzugt erstreckt sich der Balg in der Bewegungsrichtung des Stellglieds, d.h., dass die Bögen bevorzugt in der Bewegungsrichtung des Stellglieds bzw. in der Bewegungsrichtung des Kolbenelements hintereinander oder untereinander bzw. übereinander angeordnet sind.

Membranartig beschreibt bevorzugt eine Ausbildung des Dichtmittels, bei der sich in der Stellgliedbewegungsrichtung bevorzugt zu keinem Zeitpunkt und besonders bevorzugt in der Schließstellung keine Wandungsanteile bzw. Körperanteile des Dichtmittels überlagern. Es ist denkbar, dass das gesamte Dichtmittel membranartig ausgebildet ist.

Gemäß einer weiteren bevorzugten Ausführungsform der vorliegenden Erfindung ist die Verschlussfläche mit dem Stellglied in Richtung der zu verschließenden Öffnung bewegbar, die Schließbewegung ist somit durch einen Antrieb realisierbar, der bevorzugt durch ein Kolbenelement ausgebildet ist, das mit einem Arbeitsgas, insbesondere mit einem Druck von 5 bar bis 20 bar, bewegbar ist.

Diese Ausführungsform ist vorteilhaft, da ein relativ geringer Druck genügt, um eine Veränderung des Funktionsgaskommunikationsweges, insbesondere eine Verschließung des Funktionsgaskommunikationsweges, zu bewirken. Diese Ausführungsform ermöglicht in vorteilhafter Weise eine Einsparung von Energie, da eine Bereitstellung eines Arbeitsgases mit einem weit höheren Druck vermieden wird.

Das Kolbenelement weist bevorzugt eine Wirkfläche auf, mit der es den zweiten Aufnahmeraum einerseits begrenzt und mit der das Arbeitsfluid zusammenwirken kann. Die Fläche der Wirkfläche entspricht bevorzugt der doppelten Fläche der Verschlussfläche und ist besonders bevorzugt größer als die doppelte Fläche der Verschlussfläche, insbesondere mehr als dreimal, viermal oder fünfmal so groß wie die Verschlussfläche.

Es ist jedoch ebenfalls denkbar, dass der Antrieb durch ein magnetisches, elektrisches, elektromagnetisches, mechanisches, hydraulisches und/oder daraus kombiniertes Stellglied erzeugbar ist. Das Stellglied kann daher direkt mit dem Antrieb verbunden sein und diesen somit ausbilden, insbesondere in Form eines pneumatischen Antriebs, oder aber indirekt mit diesem zusammenwirken, insbesondere in Form eines elektromagnetischen Antriebs, wodurch der Antrieb bevorzugt auch als separater Antrieb ansehbar ist.

Gemäß einer weiteren bevorzugten Ausführungsform der vorliegenden Erfindung ist das Funktionsfluid Reinluft bzw. Druckluft, d.h. bevorzugt sterile Luft, mit einem Druck von 21 bar bis 60 bar, bevorzugt von 30 bar bis 50 bar und besonders bevorzugt von ca. 40 bar oder genau 40 bar.

Die Aufschaltbewegung des Ventils, d.h. die Öffnungsbewegung des Ventils bzw. das Beabstanden der Verschlussfläche von der Öffnung, ist daher z.B. durch eine Art Druckkissen bzw. den Druck im ersten Aufnahmeraum durchführbar. Es ist dabei bevorzugt der Druck zumindest zeitweise im ersten Aufnahmeraum größer als im zweiten Aufnahmeraum, wodurch eine Rückführung der Verschlussfläche bzw. des Stellglieds und bevorzugt des Kolbenelements selbsttätig möglich ist. Besonders bevorzugt ist das Verhältnis aus der auf die Verschlussfläche wirkenden Kraft und der Verschlussfläche zum Zurückführen der Verschlussfläche in eine geöffnete bzw. eine weiter geöffnete Position zeitweise größer als das Verhältnis aus der auf die Wirkfläche wirkende Kraft und der Wirkfläche.

Diese Ausführungsform ist vorteilhaft, da das zur Umformung des Vorformlings bzw. der Vorformlinge verwendete Fluid zum Erzeugen einer Rückführbewegung des Stellglieds bzw. des Kolbenelements in eine geöffnete oder weiter geöffnete Stellung verwendbar ist. D.h., dass bevorzugt keine weitere Energie benötigt wird, um das Stellglied bzw. das Kolbenelement in den offenen Zustand zu überführen. Bei den Vorformlingen handelt es sich besonders bevorzugt um Kunststoffvorformlinge, insbesondere aus PET.

Gemäß einer weiteren bevorzugten Ausführungsform der vorliegenden Erfindung bestehend das Dichtmittel zumindest teilweise aus einem Material ausgewählt aus der Gruppe zumindest bestehend aus Metall, Elastomere, insbesondere Gummi oder Kunststoff, insbesondere Teflon, ähnlichem und/oder Kombinationen daraus.

Das Dichtmittel stellt somit bevorzugt ein flexibles Element oder ein zumindest teilweise flexibles Element dar. Dieses Element kann als Teflonbalg bzw. eine Teflonmembran ausgebildet sein, wobei ebenfalls denkbar ist, dass es aus einer Kombination dieser Materialien besteht.

Diese Ausführungsform ist vorteilhaft, da, insbesondere im Falle der Verwendung mehrerer Materialien, die Materialien optimiert nach ihren Eigenschaften verwendet werden können.

Weiterhin ist die vorliegende Erfindung auf eine Blasmaschine zum Umformen von Kunststoffvorformlingen in Behältnisse, insbesondere Flaschen, gerichtet, die mindestens ein Blasventil nach Anspruch 1 umfasst.

Somit wird gemäß der Erfindung ebenfalls vorgeschlagen bei einer hygienisch optimierten Maschine ein Blasluftventil einzusetzen, bei dem der sterile Ventilraum bzw. Steuerraum getrennt zum ungereinigten Ventilraum ist. Dieses wird insbesondere durch den Einsatz eines flexiblen Elements, nämlich dem Dichtmittel, erreicht.

Die vorliegende Erfindung ist ebenfalls auf eine Abfüllanlage gerichtet, die bevorzugt mindestens eine Heizeinrichtung zum Aufheizen von Kunststoffvorformlingen, eine in der Transportrichtung nach der Heizeinrichtung angeordnete Blasmaschine nach Anspruch 9 und einen in der Transortrichtung nach der Blasmaschine angeordneter Füller zum Füllen der Behältnisse umfasst. Besonders bevorzugt erfolgen in der Anlage Sterilisationsprozesse unter Einsatz von H2O2, Peressigsäure oder Ähnlichem. Die Betriebstemperatur der Anlage und insbesondere des Blasventils liegt bevorzugt bei 20°C und die Schaltzeit des Blasventils liegt zwischen 15 ms und 60 ms und bevorzugt zwischen 25 ms und 35 ms, insbesondere beträgt die Schaltzeit ca. bzw. genau 30 ms.

Weitere Vorteile, Ziele und Eigenschaften vorliegender Erfindung werden anhand nachfolgender Beschreibung anliegender Zeichnungen erläutert, in welchen beispielhaft Blasventile für die Veränderung eines Funktionsgaskommunikationswegs dargestellt sind. Bauteile der Blasventile, welche in den Figuren wenigsten im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1a: eine zweidimensionale Darstellung eines erfindungsgemäßen Blasventils in einer ersten Ausführungsform in einem geöffneten Zustand;
- Fig. 1b: eine zweidimensionale Darstellung eines erfindungsgemäßen Blasventils in der ersten Ausführungsform in einem geschlossenen Zustand;
- Fig. 2a: eine dreidimensionale Darstellung eines erfindungsgemäßen Blasventils in der ersten Ausführungsform in einem geöffneten Zustand;
- Fig. 2b: eine dreidimensionale Darstellung eines erfindungsgemäßen Blasventils in der ersten Ausführungsform in einem geschlossenen Zustand;
- Fig. 3a: eine zweidimensionale Darstellung eines erfindungsgemäßen Blasventils in einer zweiten Ausführungsform in einem geöffneten Zustand;
- Fig. 3b: eine zweidimensionale Darstellung eines erfindungsgemäßen Blasventils in der zweiten Ausführungsform in einem geschlossenen Zustand;
- Fig. 4a: eine dreidimensionale Darstellung eines erfindungsgemäßen Blasventils in der zweiten Ausführungsform in einem geöffneten Zustand;
- Fig. 4b: eine dreidimensionale Darstellung eines erfindungsgemäßen Blasventils in der zweiten Ausführungsform in einem geschlossenen Zustand;
- Fig. 5a: eine schematische Darstellung einer Blasmaschine mit einem erfindungsgemäßen Blasventil;
- Fig. 5b: eine schematische Darstellung eines Behältnisses vor und nach der Umformung; und
- Fig. 5c: eine schematische Darstellung einer Anlage zum Umformen von Behältnissen.

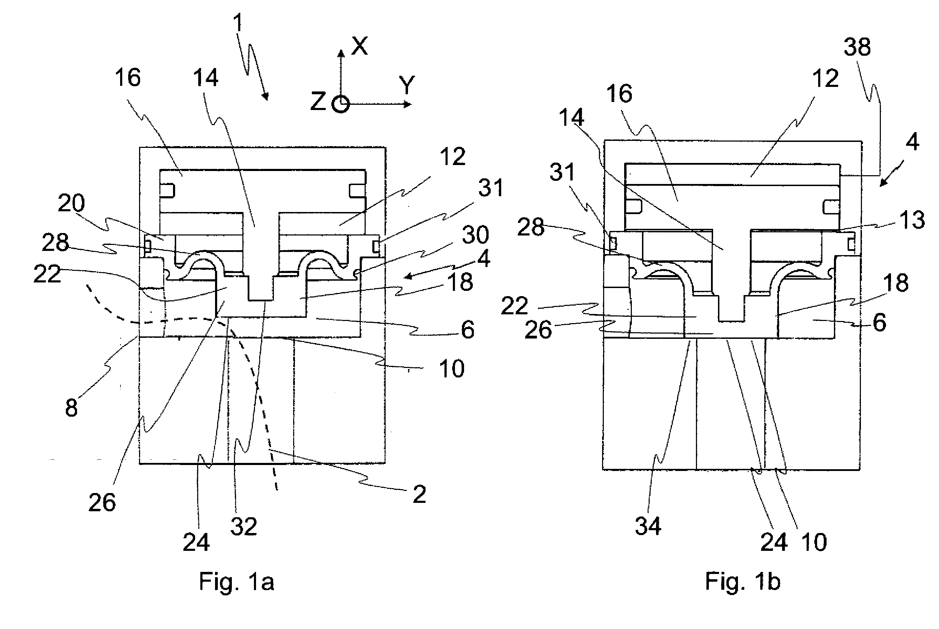

In Fig. 1a ist eine zweidimensionale Darstellung eines erfindungsgemäßen Blasventils 1 in einer ersten Ausführungsform gezeigt. Das Blasventil 1 dient zum Verändern eines Funktionsgaskommunikationswegs 2, der sich durch eine Eintrittsöffnung 8, einen ersten Aufnahmeraum 6 und eine Austrittsöffnung 10 des Blasventilgehäuses 4 erstreckt. Die Eintrittsöffnung 8 und die Austrittsöffnung 10 können hierbei vertauscht und/oder an derselben Wandung bzw. demselben Wandungsbereich ausgebildet sein. Es ist ferner vorstellbar, dass eine Vielzahl an Eintritts- und/oder Austrittsöffnungen 8, 10 vorgesehen ist, wobei die Eintritts- und/oder Austrittsöffnungen 8, 10 bevorzugt Bohrungen sind. In X-Richtung vom ersten Aufnahmeraum 6 beabstandet ist in dem Blasventilgehäuse 4 ein zweiter Aufnahmeraum 12 ausgebildet. Weiterhin ist denkbar, dass eine oder mehrere Eintritts- und/oder Austrittsöffnungen 8, 10 mit einem weiteren Verschlussmittel (nicht gezeigt) verschließbar sind.

In Fig. 1a ist das Blasventil 1 in einem geöffneten Zustand, d.h., dass ein Gastransport gemäß dem Fluidkommunikationsweg 2 durch den ersten Aufnahmeraum 6 hindurch erfolgen kann.

Der erste und zweite Aufnahmeraum 6, 12 sind bevorzugt durch genau ein Dichtmittel 18 voneinander getrennt bzw. gekapselt. Das Dichtmittel 18 ist bevorzugt ein zumindest teilweise flexibles Element, das bevorzugt so aufgebaut ist, dass es auf der einen Seite fest eingespannt ist, mit einer statischen Dichtstelle gegenüber dem Rückraum abdichtet und auf der anderen Seiten mit dem flexiblen Teil des Elements eine Ein- bzw. Auslassbohrung abdichten kann.

Im zweiten Aufnahmeraum 12 ist bevorzugt ein Stellglied 14, insbesondere ein Kolbenelement 16, angeordnet. Das Kolbenelement 16 ist besonders bevorzugt in X-Richtung bewegbar, insbesondere verschiebbar, d.h., dass das Kolbenelement 16 bevorzugt gleitgelagert ist. Das Kolbenelement 16 weist einen ersten und einen zweiten Bereich auf, wobei der erste Bereich als untere Bereich und der zweite Bereich als oberer Bereich angesehen werden kann. Der obere Bereich ist bevorzugt vom ersten Aufnahmeraum 6 weiter beabstandet als der untere Bereich und weist bevorzugt eine sich im Wesentlichen und besonders bevorzugt genau in einer Y/Z-Ebene erstreckende Oberfläche auf. Der untere Bereich weist ebenfalls bevorzugt eine sich im Wesentlichen und besonders bevorzugt genau in einer Y/Z-Ebene erstreckende Oberfläche auf, wobei die Oberfläche des oberen Bereichs bevorzugt größer und besonders bevorzugt um ein Vielfaches größer ist als die Oberfläche des unteren Bereichs. Bevorzugt ist der sich zwischen dem oberen Teil des Kolbenelements 16 und dem Dichtmittel 18 befindliche Raum zeitweise drucklos, insbesondere dauerhaft drucklos, d.h., in dem Raum zwischen dem Dichtmittel 18 und dem Kolbenelement 16 herrscht bevorzugt ein geringerer Druck als im ersten Aufnahmeraum 6 und/oder in dem verbleibenden Aufnahmeraum 12, d.h. in X-Richtung oberhalb dem oberen Bereich des Kolbenelements 16.

Der untere Bereich des Kolbenelements 16 ist bevorzugt mit dem Dichtmittel 18 in einem Kopplungsbereich 32 verbunden. Das Dichtmittel 18 weist bevorzugt einen gegenüber dem Ventilgehäuse ortsfesten Anteil 20 auf, der mit der Wandung des Blasventilkörpers 4 bzw. - gehäuses gekoppelt, insbesondere fest verbunden ist. Es ist hierbei denkbar, dass der ortsfeste Anteil 20 des Dichtmittels 18 reib-, form- und/oder stoffschlüssig mit dem Blasventilkörper 4 verbunden ist. Bevorzugt ist das Dichtmittel 18 lösbar mit dem Blasventilkörper 4 verbunden, wobei auch eine unlösbare Verbindung vorstellbar ist. Bevorzugt in Y-Richtung beabstandet, d.h. in das Innere des Blasventilkörpers 4 hineinragend, erstreckt sich in Verlängerung des ortsfesten Anteils 20 ein beweglicher Anteil 22, der bevorzugt zumindest abschnittsweise in X-Richtung verschiebbar ist. An dem beweglichen Anteil 22 ist eine Verschlussfläche 24 zum Verschließen einer Eintritts- und/oder Austrittsöffnung 8, 10, insbesondere der Austrittsöffnung 10, vorgesehen. Der bewegliche Anteil kann dabei flexibel und/oder dehnbar ausgestaltet sein.

Der bewegliche Anteil 22 ist funktionell in einen ersten und einen zweiten Teil 26, 28 unterteilbar. Der erste Teil 26 des beweglichen Anteils 22 ist mit dem Kolbenelement 16 gekoppelt und daher gegenüber diesem unbewegt. Der zweite Teil 28 des beweglichen Anteils 22 verbindet bevorzugt den ersten Teil 26 des beweglichen Anteils 22 mit dem ortsfesten Anteil 20. Der zweite Teil 28 ist bevorzugt flexibel bzw. elastisch ausgebildet und zumindest teilweise in X-Richtung verschiebbar. Ferner erfolgt bei einer Verschiebebewegung des Kolbenelements 16 eine Verformung des zweiten Teils 28, der in der in Fig. 1 a gezeigten Ausführungsform bevorzugt wellenförmig, insbesondere S-förmig, ausgebildet ist.

Weiterhin weist das Dichtmittel 18 bevorzugt zwei umlaufende Kerben 30, 31 auf, wobei die erste Kerbe 30 im Bereich des zweiten Teils 28 des beweglichen Anteils 22 und die zweite Kerbe 31 im Bereich des ortsfesten Anteils 20 des Dichtmittels 18 ausgebildet ist. Die erste und/oder zweite Kerbe 30, 31 können gebogene und/oder gerade Begrenzungsbereiche aufweisen, wobei die erste Kerbe 30 bevorzugt eine gebogene Grundform aufweist und die zweite Kerbe 31 bevorzugt eine gerade Grundform aufweist.

In Fig. 1b ist das in Fig. 1a gezeigte Blasventil 1 in einem zweiten Zustand, nämlich einem geschlossenen Zustand, gezeigt. Oberhalb dem oberen Bereich des Kolbenelements 16 ist in diesem Zustand ein Druck durch die Zuführung eines Arbeitsgases vorhanden, durch den zum einen eine Verschiebung des Kolbenelements 16 aus der in Fig. 1a gezeigten Stellung in die in Fig. 1 b gezeigte Stellung ermöglicht wurde und der zum anderen eine zeitweise und/oder dauerhafte Verschließung der Austrittsöffnung durch Anpressen der Verschlussfläche 24 an einen Verschlusskontaktbereich 34 ermöglicht. Das Bezugszeichen 38 kennzeichnet eine Leitungsverbindung über die dem zweiten Aufnahmeraum 12 ein Arbeitsgas zum Bewegen des Kolbenelements 16 zuführbar ist.

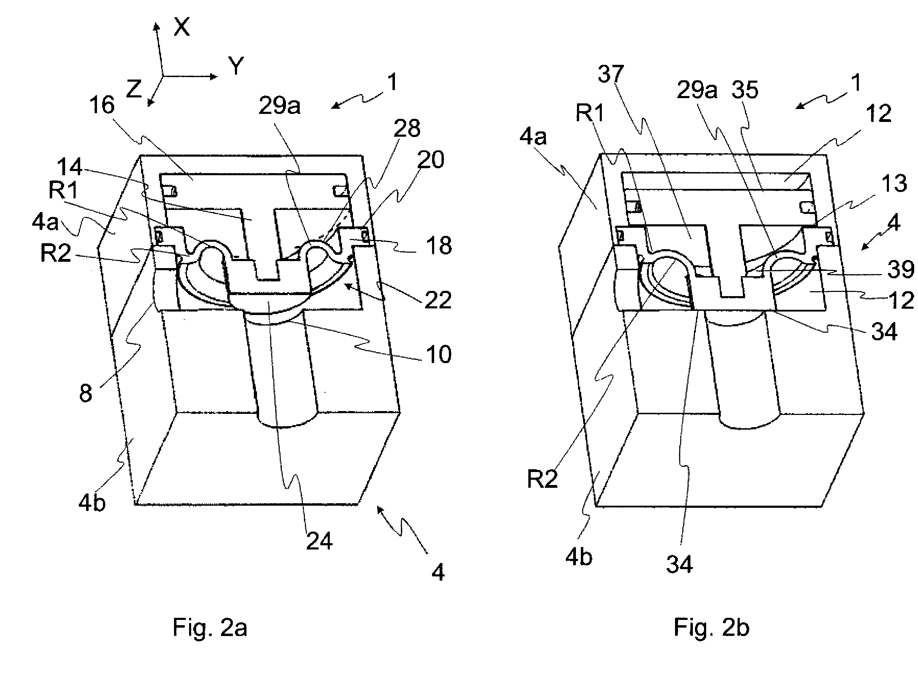

In Fig. 2a ist die in Fig. 1a gezeigte Ausführungsform in einer dreidimensionalen Darstellung gezeigt. Es ist dieser Darstellung zu entnehmen, dass das Stellglied 14 bzw. das Kolbenelement 18, die Verschlussfläche 24, das Dichtmittel 18 sowie die Eintritts- und Austrittsöffnungen 8, 10 rund ausgeführt sein können. Es ist jedoch ebenfalls vorstellbar, dass einzelne oder alle der zuvor genannten Komponenten eine von einer runden Form abweichende Form, insbesondere eine Form mit geraden Anteilen, ausbilden können.

Weiterhin ist der Fig. 2a zu entnehmen, dass der Blasventilkörper 4 mehrteilig, insbesondere zweiteilig, ausgebildet sein kann. Das Bezugszeichen 4a kennzeichnet dabei bevorzugt einen ersten Teil des Blasventilkörpers 4 und das Bezugszeichen 4b kennzeichnet bevorzugt einen zweiten Teil des Blasventilkörpers 4, wobei das Dichtmittel 18 bevorzugt zwischen sich insbesondere in X-Richtung erstreckenden Wandungsteilen des ersten und zweiten Teils 4a, 4b des Blasventilkörpers 4 angeordnet, insbesondere eingeklemmt und/oder eingeklebt und/oder anvulkanisiert ist.

Der S-förmige Bereich 29a des zweiten Teils 28 des beweglichen Anteils 22 weist bevorzugt einen ersten gebogenen Abschnitt, der bevorzugt am ortsfesten Anteil 20 angrenzt, mit einem ersten Radius R1 und einen zweiten gebogenen Abschnitt, der bevorzugt am ersten Teil 26 des beweglichen Anteils 22 angrenzt, mit einem zweiten Radius R2 auf. Die Radien R1 und R2 können gleich groß oder verschieden voneinander sein, wobei der Radius R1 bevorzugt größer ist als der Radius R2 und besonders bevorzugt um ein Vielfaches größer ist als der Radius R2.

In Fig. 2b ist eine dreidimensionale Ansicht der in Fig. 1b gezeigten Ausführungsform in einem geschlossenen Zustand dargestellt. Es ist der Fig. 2b zu entnehmen, das die Radien R1 und R2 des S-förmigen Bereichs 29a sich infolge der Verschiebung des Kolbenelements 16 verändert, insbesondere aufgeweitet, haben. Das Bezugszeichen 13 kennzeichnet einen Totbereich, d.h. einen Bereich in den das Kolbenelement 16 bevorzugt nicht hinein verschiebbar ist. Der Bereich zwischen der Unterseite 37 des Stellglieds 14 bzw. des Kolbenelements 16 und der Oberseite des Dichtmittels 18 ist bevorzugt drucklos bzw. erfährt besonders bevorzugt keine wesentlichen Druckänderungen.

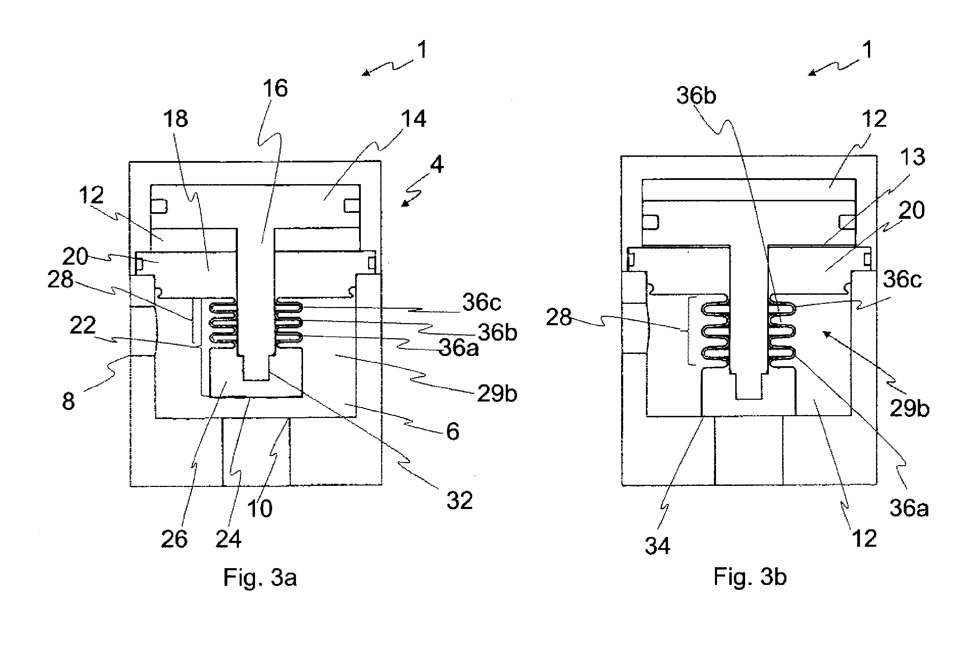

In Fig. 3a ist eine zweidimensionale Darstellung einer zweiten Ausführungsform der vorliegenden Erfindung in einem ersten Zustand, insbesondere in einem geöffneten Zustand, gezeigt. Der ortsfeste Anteil 20 des Dichtmittels 18 erstreckt sich bevorzugt im Wesentlichen parallel und besonders bevorzugt vollständig parallel zu der Y/Z-Ebene und im Wesentlichen vollständig von der Seitenwandung des Blasventilkörpers 4 ins Zentrum des Blasventilkörpers 4. Im Bereich des Zentrums des Blasventilkörpers 4 oder in einem sonstigen Bereich, in dem das Stellglied zumindest abschnittsweise vom Dichtmittel 18 umgeben ist, ist das Stellglied 14 gegenüber dem Dichtmittel 18 bewegbar. An den ortsfesten Anteil 20 schließt sich bevorzugt der bewegliche Anteil 22 an, der sich bevorzugt in X-Richtung erstreckt.

Der bewegliche Anteil 22 weist ebenfalls, wie in der in dem Figuren 1a-2b gezeigten ersten Ausführungsform einen ersten Teil 26 und einen zweiten Teil 28 auf. Der erste Teil 26 ist ebenfalls in dem mit dem Bezugszeichen 32 gekennzeichneten Kopplungsbereich mit dem Stellglied 14 bzw. dem Kolbenelement 16 verbunden. Der zweite Teil 28 des beweglichen Anteils 22 verbindet wiederum den ersten Teil 26 des beweglichen Anteils 22 mit dem ortsfesten Anteil 20.

Es ist der Fig. 3a zu entnehmen, dass der zweite Teil 28 des beweglichen Anteils 22 als balgartiger Bereich 29b ausgebildet ist. Der balgartige Bereich 29b ist durch Bögen oder Falten 36a-36c gekennzeichnet, wobei der balgartige Bereich 29b eine beliebige Anzahl an Bögen oder Falten 36a-36c, insbesondere genau 1 ,2, 3, 4, 5, 6, 7, 8 oder 9 Bögen oder Falten 36a-36c, aufweist. Die Bögen 36a-36c sind in der geöffneten Konfiguration bevorzugt gestaucht bzw. in einer neutralen Stellung.

In Fig. 3b ist die in Fig. 3a gezeigte Ausführungsform in einem geschlossenen Zustand dargestellt. Die Bögen 36a-c sind bevorzugt zugbelastet bzw. teilweise entspannt oder in einer neutralen Stellung. Je nach Anzahl und Form der Bögen 36a-36c sind verschiedene Hubwege des Kolbenelements 16 durchführbar bzw. einstellbar.

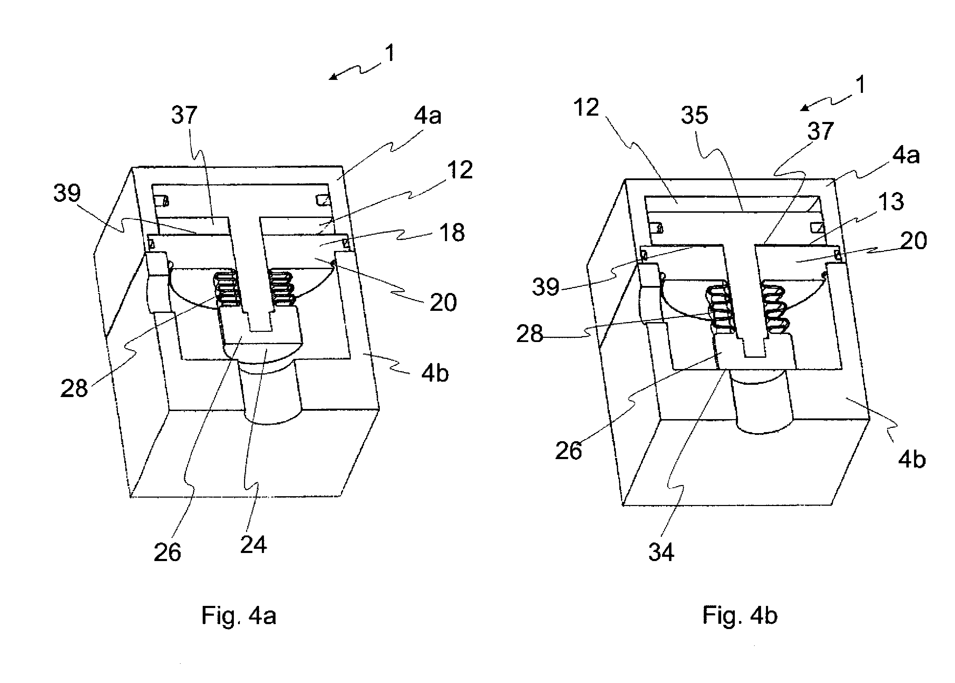

In den Figuren 4a und 4b sind entsprechend den Figuren 2a und 2b dreidimensionale Darstellungen der in den Figuren 3a und 3b gezeigten Blasventile 1 gezeigt. Der Fig. 4b ist zu entnehmen, dass der Totbereich 13 bzw. der gesamte Bereich zwischen der Unterseite 37 des Kolbenelements 16 und der Oberseite 39 des Dichtmittels 18 sehr klein, insbesondere ein Bruchteil des oberseitig des Kolbenelements 18 ausgebildeten Aufnahmebereichs zum Aufnehmen des Arbeitsgases ist. Es ist vorstellbar, dass der Totbereich 13 über eine Leitungsverbindung (nicht gezeigt) mit der Umgebung bzw. einer weiteren Einrichtung verbunden ist und über die Leitungsverbindung ein Gas, insbesondere Luft, austauschen kann.

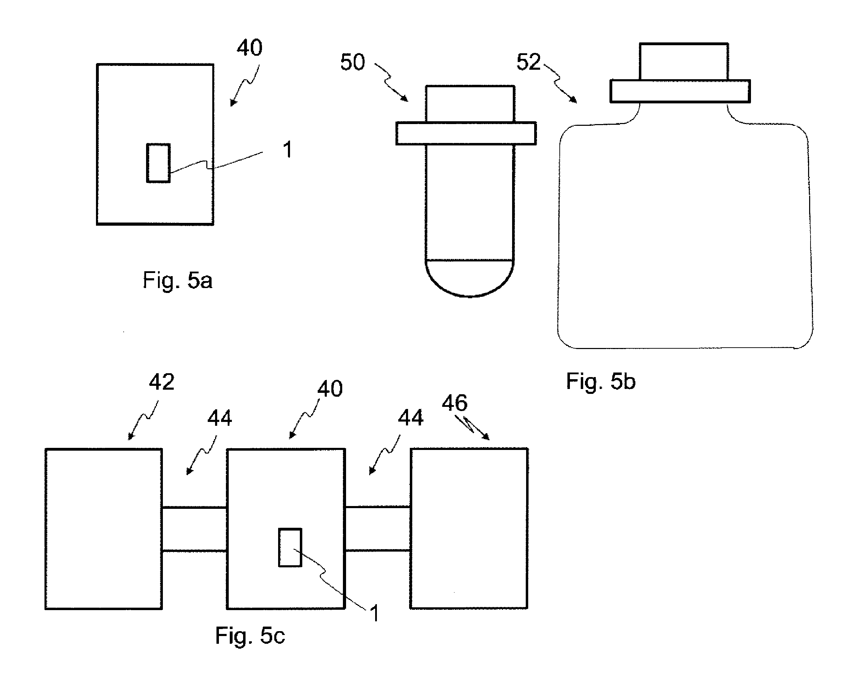

In Fig. 5a ist eine schematische Darstellung einer Blasmaschine 40 mit einem erfindungsgemäßen Blasventil 1 dargestellt.

In Fig. 5b ist schematisch ein Vorformling 50 und ein aus dem Vorformling 50 gefertigtes Behältnis 52 gezeigt.

In Fig. 5c ist schematisch eine Abfüllanlage 41 mit einer Heizeinrichtung 42, einer Blasmaschine 40 und einem Füller 46 dargestellt. Die Blasmaschine 40 weist dabei mindestens ein erfindungsgemäßes Blasventil 1 auf. Mittels einer Transporteinrichtung 44 werden die Vorformlinge 52 von der Heizeinrichtung 42 zur Blasmaschine 40 und von dort zu einem Füller 46 gefördert. Es ist hierbei denkbar, dass der Füller 46 nicht vorgesehen sein muss, da eine Befüllung der erzeugten Behältnisse 46, insbesondere mit Lebensmittel, wie Getränken, auch an einem anderen Ort zu einer anderen Zeit erfolgen kann.

An dieser Stelle sei noch darauf hingewiesen, dass sich die Anmelderin vorbehält sämtliche in den Anmeldungsunterlagen offenbarten Merkmale zu beanspruchen soweit sie einzeln oder in Kombination miteinander gattungsgemäße oder aus dem Stand der Technik bekannte Blasventile vorteilhaft weiterentwickeln.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Blasventil
- 2: Funktionsgaskommunikationsweg
- 4: Blasventilkörper
- 4a: erster Teil des Blasventilkörpers
- 4b: zweiter Teil des Blasventilkörpers
- 6: erster Aufnahmeraum
- 8: Eintrittsöffnung
- 10: Austrittsöffnung
- 12: zweiter Aufnahmeraum
- 13: Totbereich
- 14: Stellglied
- 16: Kolbenelement
- 18: Dichtmittel
- 20: ortsfester Anteil
- 22: beweglicher Anteil

- 24: Verschlussfläche
- 26: erster beweglicher Teil
- 28: zweiter beweglicher Teil
- 29a: S-förmiger Bereich
- 29b: balgartiger Bereich
- 30: erste Kerbe
- 31: zweite Kerbe
- 32: Kopplungsbereich
- 34: Verschlusskontaktbereich
- 35: Wirkfläche
- 36a-c: Bögen/Falten
- 37: Unterseite Stellglied
- 38: Leitungsverbindung
- 39: Oberseite Dichtmittel
- 40: Blasmaschine
- 41: Abfüllanlage
- 42: Heizeinrichtung
- 44: Transporteinrichtung
- 46: Füller
- 50: Vorformling
- 52: Behältnis/Flasche
- R1: erster Radius
- R2: zweiter Radius
- X: Längsrichtung
- Y: Breitenrichtung
- Z: Tiefenrichtung

## Patentansprüche

1. Blasmaschine (40) zum Umformen von Kunststoffvorformlingen in Behältnisse, insbesondere Flaschen, mindestens umfassend ein Blasventil (1) zum Verändern einer Funktionsgasdurchflussmenge in einem Funktionsgaskommunikationsweg (2), mindestens umfassend
einen Blasventilkörper (4),
einen in dem Blasventilkörper (4) ausgebildeten aseptischen ersten Aufnahmeraum (6) mit mindestens einer Eintrittsöffnung (8) und mindestens einer Austrittsöffnung (10) zum Aufnehmen und Leiten eines Funktionsgases,
einen zweiten in dem Blasventilkörper (4) ausgebildeten Aufnahmeraum (12) zum Führen eines Stellglieds (14), insbesondere einem Kolbenelement (16), wobei zwischen dem ersten Aufnahmeraum (6) und dem zweiten Aufnahmeraum (12) ein Dichtmittel (18) angeordnet ist, das einen Gasaustausch zwischen dem ersten Aufnahmeraum (6) und dem zweiten Aufnahmeraum (12) vollständig verhindert, **dadurch gekennzeichnet, dass** das Dichtmittel (18) einen ortsfesten Anteil (20) zum Fixieren an dem Blasventilkörper (4) und einen beweglichen Anteil (22) zum Verändern der Funktionsgasdurchflussmenge aufweist, wobei das Stellglied (14) teilweise von dem Dichtmittel (18) umschlossen ist und zum Bewegen des beweglichen Anteils (22) mit diesem gekoppelt ist, wobei zum Verschließen der mindestens einen Öffnung (8, 10) der bewegliche Anteil (22) eine Verschlussfläche (24) ausbildet, die mit der Öffnung (8, 10) in Kontakt bringbar ist, und wobei ein Teil des beweglichen Anteils balgartig, mit mindestens einer einen Bogen auszubildenden Falte, und/oder membranartig ausgebildet ist, und wobei die Schaltzeit des Blasventils zwischen 15ms und 60ms liegt.

2. Blasmaschine (40) zum Umformen von Kunststoffvorformlingen in Behältnisse, umfassend ein Blasventil nach Anspruch 1,
**dadurch gekennzeichnet, dass**
die Verschlussfläche (24) an einem ersten Teil (26) des beweglichen Anteils (22) ausgebildet ist, der fest an dem Stellglied (14) angeordnet ist.

3. Blasmaschine (40) zum Umformen von Kunststoffvorformlingen in Behältnisse, umfassend ein Blasventil nach Anspruch 2,
**dadurch gekennzeichnet, dass**
zwischen dem ersten Teil (26) des beweglichen Anteils (22) und dem ortsfesten Anteil (20) des Dichtmittels (18) ein zweiter beweglicher Teil (28) ausgebildet ist, der gegenüber dem Kolbenelement (16) beweglich ist.

4. Blasmaschine (40) zum Umformen von Kunststoffvorformlingen in Behältnisse, umfassend ein Blasventil nach Anspruch 3,
**dadurch gekennzeichnet, dass**
der zweite bewegliche Teil (28) balgartig, insbesondere mäanderförmig, und/oder membranartig ausgebildet ist.

5. Blasmaschine (40) zum Umformen von Kunststoffvorformlingen in Behältnisse, umfassend ein Blasventil (1) nach einem der vorangegangenen Ansprüche,
**dadurch gekennzeichnet, dass**
das Kolbenelement (16) mit einem Arbeitsgas, insbesondere mit einem Druck von 5 bar bis 20 bar, bewegbar ist.

6. Blasmaschine (40) zum Umformen von Kunststoffvorformlingen in Behältnisse, umfassend ein Blasventil (1) nach einem der vorangegangenen Ansprüche,
**dadurch gekennzeichnet, dass**
das Funktionsgas Reinluft mit einem Druck von 20 bar bis 60 bar ist

7. Blasmaschine (40) zum Umformen von Kunststoffvorformlingen in Behältnisse, umfassend ein Blasventil (1) nach einem der vorangegangenen Ansprüche,
**dadurch gekennzeichnet, dass**
das Dichtmittel (18) zumindest teilweise aus einem Material ausgewählt aus der Gruppe zumindest bestehend aus Metall, Gummi, Kunststoff, insbesondere Teflon, ähnlichem und/oder Kombinationen daraus besteht.

8. Abfüllanlage (41) mindestens umfassen eine Heizeinrichtung (42) zum Aufheizen von Kunststoffvorformlingen (50), eine in der Transportrichtung nach der Heizeinrichtung (42) angeordnete Blasmaschine (40) nach Anspruch 1 und einen in der Transortrichtung nach der Blasmaschine (40) angeordneten Füller (46) zum Füllen der Behältnisse (52).

## Claims

1. Blow moulding machine (40) for shaping plastics material preforms into containers, in particular bottles, comprising at least one blow valve for changing a flow rate of operation gas in a communication path of the operation gas (2), comprising at least one blow valve body (4),
an aseptic first receiving space (6) constructed in the blow valve body (4) and having at least one entry opening (8) and at least one exit opening (10) for receiving and conveying an operation gas,
and a second receiving space (12) constructed in the blow valve body (4) for the guidance of a setting member (14), in particular a piston element (16),
wherein
a sealing means (18) which completely prevents an exchange of gas between the first receiving space (6) and the second receiving space (12) is arranged between the first receiving space (6) and the second receiving space (12), **characterized in that** the sealing means (18) has a stationary part (20) for fixing to the blow valve body (4) and a movable part (22) for changing the flow rate of the operation gas, wherein the setting member (14) is surrounded in part by the sealing means (18) and is coupled to the movable part (22) in order to move the latter, wherein for closing the at least one opening (8, 10), the movable portion (22) forms a closure surface (24), which is capable of being brought into contact with the opening (8,10) and wherein a part of the movable portion is formed in the manner of a bellows with at least one fold which has to form an arc and/or is formed in the form of a membrane and wherein the switching time of the blow valve is between 15 milliseconds and 60 milliseconds.

2. Blow moulding machine (40) for shaping plastics material preforms into containers comprising a blow valve according to claim 1, **characterized in that** the closure face (24) is formed on a first part (26) of the movable part (22) which is arranged in a fixed manner on the setting member (14).

3. Blow moulding machine (40) for shaping plastics material preforms into containers comprising a blow valve according to claim 2, **characterized in that** a second movable part (28) which is movable with respect to the piston element (16) is formed between the first part (26) of the movable part (22) and the stationary part (20) of the sealing means (18).

4. Blow moulding machine (40) for shaping plastics material preforms into containers comprising a blow valve according to claim 3, **characterized in that** the second movable part (28) is designed in the manner of a bellows, in particular in a meander shape, and/or in the manner of a diaphragm.

5. Blow moulding machine (40) for shaping plastics material preforms into containers comprising a blow valve (1) according to any one of the preceding claims, **characterized in that** the piston element (16) is movable with a working gas, in particular at a pressure of from 5 bar to 20 bar.

6. Blow moulding machine (40) for shaping plastics material preforms into containers comprising a blow valve (1) according to any one of the preceding claims, **characterized in that** the working fluid is clean air at a pressure of from 20 bar to 60 bar.

7. Blow moulding machine (40) for shaping plastics material preforms into containers comprising a blow valve (1) according to any one of the preceding claims, **characterized in that** the sealing means (18) consists at least in part of a material selected from the group at least comprising metal, rubber, plastics material, in particular Teflon, similar material and/or combinations thereof.

8. A filling plant (41) at least comprising a heating device (42) for heating plastics material preforms (50), a blow moulding machine (40) according to claim 1 arranged downstream of the heating device (42) in the conveying direction, and a filling means (46) arranged downstream of the blow moulding machine (40) in the conveying direction in order to fill the containers (52).

## Revendications

1. Machine de soufflage (40) destinée à transformer des paraisons en matière plastique en récipients, en particulier en bouteilles, comportant au moins une vanne de soufflage (1) permettant de modifier un débit du gaz opérationnel dans une voie de communication (2) du gaz opérationnel, comportant au moins
un corps de vanne de soufflage (4),
une première chambre de réception (6) aseptique, réalisée dans le corps de vanne de soufflage (4) et munie d'au moins une ouverture d'entrée (8) et d'au moins une ouverture de sortie (10) pour recevoir et guider un gaz opérationnel,
une deuxième chambre de réception (12), réalisée dans le corps de vanne de soufflage (4) pour guider un organe de réglage (14), en particulier un élément de piston (16),
un moyen d'étanchéité (18) étant disposé entre la première chambre de réception (6) et la deuxième chambre de réception (12), lequel empêche complètement la formation d'un échange de gaz entre la première chambre de réception (6) et la deuxième chambre de réception (12),
**caractérisée en ce que**
le moyen d'étanchéité (18) comporte une partie fixe (20) pour la fixation au corps de vanne de soufflage (4) et une partie mobile (22) pour modifier le débit du gaz opérationnel, l'organe de réglage (14) étant entouré partiellement par le moyen d'étanchéité (18) et étant couplé à la partie mobile (22) pour le déplacement de celle-ci, et pour la fermeture de ladite au moins une ouverture (8, 10), la partie mobile (22) comportant une surface de fermeture (24) qui peut être amenée en contact avec l'ouverture (8, 10), et une portion de la partie mobile étant réalisée en forme de soufflet avec au moins un pli formant une courbe, et/ou en forme de membrane, et le temps de connexion de la vanne de soufflage se situant entre 15 ms et 60 ms.

2. Machine de soufflage (40) destinée à transformer des paraisons en matière plastique en récipients, comportant une vanne de soufflage, selon la revendication 1, **caractérisée en ce que** la surface de fermeture (24) est réalisée sur une première portion (26) de la partie mobile (22), laquelle est disposée de manière fixe sur l'organe de réglage (14).

3. Machine de soufflage (40) destinée à transformer des paraisons en matière plastique en récipients, comportant une vanne de soufflage selon la revendication 2, **caractérisée en ce qu'**entre la première portion (26) de la partie mobile (22) et la partie fixe (20) du moyen d'étanchéité (18) est réalisée une deuxième portion mobile (28) qui est mobile par rapport à l'élément de piston (16).

4. Machine de soufflage (40) destinée à transformer des paraisons en matière plastique en récipients, comportant une vanne de soufflage, selon la revendication 3, **caractérisée en ce que** la deuxième portion mobile (28) est réalisée en forme de soufflet, en particulier en forme de méandres, et/ou en forme de membrane.

5. Machine de soufflage (40) destinée à transformer des paraisons en matière plastique en récipients, comportant une vanne de soufflage (1), selon l'une quelconque des revendications précédentes, **caractérisée en ce que** l'élément de piston (16) peut être déplacé au moyen d'un gaz de travail, en particulier avec une pression de 5 bars à 20 bars.

6. Machine de soufflage (40) destinée à transformer des paraisons en matière plastique en récipients, comportant une vanne de soufflage (1), selon l'une quelconque des revendications précédentes, **caractérisée en ce que** le gaz opérationnel est de l'air pur avec une pression de 20 bars à 60 bars.

7. Machine de soufflage (40) destinée à transformer des paraisons en matière plastique en récipients, comportant une vanne de soufflage (1), selon l'une quelconque des revendications précédentes, **caractérisée en ce que** le moyen d'étanchéité (18) est choisi au moins en partie dans un matériau issu du groupe contenant au moins du métal, du caoutchouc, une matière plastique, en particulier du téflon, un élément similaire et/ou des combinaisons de ceux-ci.

8. Installation de soutirage (41) comportant au moins un dispositif de chauffage (42) destiné à chauffer les paraisons (50) en matière plastique, une machine de soufflage (40) selon la revendication 1 disposée, par référence sens de transport, en aval du dispositif de chauffage (42), et un dispositif de remplissage (46), disposé par référence au sens de transport en aval de la machine de soufflage (40) et destiné au remplissage des récipients (52).
